(19) **Europäisches Patentamt**
**European Patent Office**
**Office européen des brevets**

(11) **EP 4 226 272 B1**

(12) **EUROPEAN PATENT SPECIFICATION**

(45) Date of publication and mention
of the grant of the patent:
**29.07.2026 Bulletin 2026/31**

(21) Application number: **21786585.6**

(22) Date of filing: **23.09.2021**

(51) International Patent Classification (IPC):
*G06V 20/56* *(2022.01)*

(52) Cooperative Patent Classification (CPC):
**G06V 20/52; G06Q 10/0877**

(86) International application number:
**PCT/IB2021/058687**

(87) International publication number:
**WO 2022/079527 (21.04.2022 Gazette 2022/16)**

(54) **GOODS RECEIPT MANAGEMENT SYSTEM AND METHOD**

SYSTEM UND VERFAHREN ZUR VERWALTUNG DES WARENEINGANGS

SYSTÈME ET MÉTHODE DE GESTION DE LA RÉCEPTION DES MARCHANDISES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2020 US 202017068139**

(43) Date of publication of application:
**16.08.2023 Bulletin 2023/33**

(73) Proprietor: **Everseen Limited
Blackpool, Cork (IE)**

(72) Inventors:
• **O'HERLIHY, Alan
Cork Glenville (IE)**
• **VLAD, Sergiu Alexandru
Timisoara (RO)**
• **BAICU, Viorel
Timisoara (RO)**

(74) Representative: **Marks & Clerk LLP
15 Fetter Lane
London EC4A 1BW (GB)**

(56) References cited:
**WO-A2-2020/152569      US-A1- 2019 122 173
US-A1- 2020 231 382**

## Description

<u>TECHNICAL FIELD</u>

The present disclosure relates to goods receipt management system and method, and more particularly to systems and methods for automated management of the receipt of goods items in a warehouse.

<u>BACKGROUND</u>

A warehouse may store very large quantities of goods items for subsequent distribution. Thus, monitoring of stock levels is an important aspect of warehouse management. Current automated warehouse management systems typically use unique bar codes imprinted on individual stock items or on their container(s) to keep track of massive numbers of goods items. In use, bar codes are read by laser beam scanners interfaced with a computer system to interpret the scanned bar code pattern; and update warehouse stock records accordingly. However, the process of reading individual bar codes of thousands/tens of thousands of goods items can be extremely time-consuming. Similarly, the integrity of the resulting stock data is limited by human errors made by the warehouse operator(s). Other warehouse management methods may involve manual counting of individual goods items and the manual entry of the resulting count data into a computerized goods receipt management system. However, this is a laborious and time-consuming task, wherein errors made during counting and data entry limit the integrity of the resulting stock data.

In today's retail environment, sales of a given product may exceed 10-20 million units (also known as goods items) annually. These goods items may be expensive and may spend extended periods in a dealer's store before being bought. Thus, the dealers may require financing for these goods items from suppliers. To protect their investment, suppliers and/or warehouse owners must keep a close eye on stocks of goods items.

In a warehouse, each goods item must be identified and tracked from the manufacturer to the distributer and the dealer network until the point of sale. While each goods item is provided by the manufacturer with a unique serial number to permit its subsequent identification, the process of inspecting individual serial numbers of vast numbers of goods items is labor-intensive and time-consuming.

Further, stock control in a dealer location is particularly difficult because the cost of floor check fees (determined by the number of goods items to be counted) makes it prohibitively expensive to count goods items more than once a month. The paucity of up-to-date information regarding numbers of goods items at various stages in a supply chain means that there is little effective correlation between sales, production, shipping, warehousing and the like. Hence, problems of left-over models, stock being in the wrong warehouse and the like, severely impact a supply chain system.

A key stage in the management of a warehouse, and supply chain management more generally, is the checking of goods items received into a warehouse or dealer location, by way of deliveries or returned goods items. Various systems have been proposed in the past for managing goods receipt at a warehouse using automated identification or image-based quantification techniques. In one example, document D1 (US 2020/0231382 A1) describes a warehouse management system in which image recognition and machine learning are used to identify and track goods within a warehouse. However, D1 does not disclose any selective retraining mechanism or environmental adaptation of configuration variables during quantification operations. In another example, document D2 (WO 2020/152569 A2) discloses a goods receipt control system that verifies the quantity of delivered goods using recorded images and related data. While D2 performs verification of goods count, it does not teach retraining of a quantification model or the use of environmental parameters to improve recognition accuracy. However, documents D1 and D2 illustrate conventional approaches in the field of goods receipt management and do not address the challenges of maintaining goods quantification accuracy under changing environmental conditions without excessive computational retraining. Thus, there is a clear need for a system which eliminates or reduces the problem of cost-effectively managing the receipt of goods items, and more particularly, checking the number of goods items received at a location.

<u>SUMMARY</u>

This summary is provided to introduce concepts related to a goods receipt management system and method in a warehouse. The concepts are further described below in the detailed description. This summary is not intended to identify key features or essential features of the claimed subject matter, nor is it intended to be used to limit the scope of the claimed subject matter.

According to a first aspect of the invention, there is provided a goods receipt management system that includes a non-transitory storage device having embodied therein one or more routines to manage the receipt of goods items at a location, and one or more processors coupled to the non-transitory storage device and operable to execute the one or more routines. The one or more routines include a face recognition engine, which when executed by the one or more processors, uses one or more facial features of a user to recognize the user as an authorised person. The one or more routines may further include a dialogue manager engine, which when executed by the one or more processors, obtains from the authorised person a stated number of goods items being delivered. The one or more routines may further include aquantification engine, which when executed by the one or more processors, receives an image of the goods items, removes background content from the image, extracts features of the goods items, classifies and labels the goods items, and calculates the number of goods items appearing in the image.The one or more routines may further include a comparison engine, which when executed by the one or more processors, compares the calculated number of goods items with the stated number of goods items, and in the event of a substantial match, records the calculated number of goods item. The one or more routines may further include a performance improvement engine, which when executed by the one or more processors, retrains the quantification engine exclusively when the calculated number of goods items does not match the stated number of goods items, and updates one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone.

According to a second aspect of the invention, there is provided a method for managing the receipt of goods at a location. The method includes recognizing, by a face recognition engine executed by one or more processors, a user as an authorised person using one or more facial features of the user. The method may further include obtaining, by a dialogue manager engine executed by the one or more processors, from the authorised person a stated number of goods items being delivered. The method may further include receiving, by a quantification engine executed by the one or more processors, an image of the goods items. The method may further include removing, by the quantification engine, background content from the image. The method may further include extracting, by the quantification engine, features of the goods items. The method may further include classifying and labelling, by the quantification engine, the goods items based on the extracted features. The method may further include calculating, by the quantification engine, the number of goods items appearing in the image. The method may further include comparing, by a comparison engine executed by the one or more processors, the calculated number of goods items with the stated number of goods items. The method may further include recording, by the comparison engine, the calculated number of goods item in the event of a substantial match between the calculated number of goods items and the stated number of goods items The method may further include retraining, by a performance improvement engine executed by the one or more processors, the quantification engine exclusively when the calculated number of goods items does not match the stated number of goods items, and updating one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone.

According to a third aspect of the invention there is provided a non-transitory computer readable medium configured to store a program causing a computer to manage the receipt of goods at a location. The program is configured to recognize a user as an authorised person using one or more facial features of the user, obtain from the authorised person a stated number of goods items being delivered, receive an image of the goods items, remove background content from the image, extract features of the goods items, classify and label the goods items based on the extracted features, calculate the number of goods items appearing in the image, compare the calculated number of goods items with the stated number of goods items, record the calculated number of goods item in the event of a substantial match between the calculated number of goods items and the stated number of goods items, and retrain the quantification engine exclusively when the calculated number of goods items does not match the stated number of goods items, and update one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone

Other and further aspects and features of the disclosure will be evident from reading the following detailed description of the embodiments, which are intended to illustrate, not limit, the present disclosure.

BRIEF DESCRIPTION OF THE DRAWINGS

The illustrated embodiments of the subject matter will be best understood by reference to the drawings, wherein like parts are designated by like numerals throughout. The following description is intended only by way of example, and simply illustrates certain selected embodiments of devices, systems, and processes that are consistent with the subject matter as claimed herein:

FIG. 1 illustrates an exemplary first environment, wherein various embodiments of the present disclosure can be practiced;

FIG.2 illustrates an exemplary second environment, wherein various embodiments of the present disclosure can be practiced;

FIG. 3 is a block diagram illustrating a goods receipt management system of **FIGs.1** and **2** in detail, in accordance with an embodiment of the present disclosure;

FIG. 4 is a block diagram illustrating a detailed view of a processing engine of the goods receipt management system of FIG. 3 in accordance with an embodiment of the present disclosure;

FIG. 5 illustrates an exemplary dialogue implemented by a dialogue manager of the processing engine of **FIG. 4** in accordance with an embodiment of the present disclosure;

FIG. 6(a) illustrates a process flow for a run-time operational phase of a first image processing engine of the goods receipt management system of FIG. 3 in accordance with an embodiment of the present disclosure;

FIG. 6(b) illustrates a process flow for a refinement operational phase of a first image processing engine of the goods receipt management system of FIG. 3 in accordance with an embodiment of the present disclosure;

FIG. 7 illustrates a process flow for a second image processing engine of the goods receipt management system of FIG. 3, in accordance with an embodiment of the present disclosure; and

FIG. 8 is a flowchart illustrating a method for implementing the goods receipt management system of **FIG.3,** in accordance with an embodiment of the present disclosure.

DETAILED DESCRIPTION

A few aspects of the present disclosure are explained in detail below with reference to the various figures. Example implementations are described to illustrate the disclosed subject matter, not to limit its scope, which is defined by the claims. Those of ordinary skill in the art will recognize several equivalent variations of the various features provided in the description that follows.

The primary aim of the present disclosure is to provide an automated system for managing the receipt of goods items into a location, to ease subsequent sorting, marking, tracking of the goods items therein. The present disclosure proposes methods and systems for providing complete automated and voice-based interactions with users of the systems. Various embodiments are further described herein with reference to the accompanying figures. It should be noted that the description and figures relate to exemplary embodiments and should not be construed as a limitation to the subject matter of the present disclosure. It is also to be understood that various arrangements may be devised that, although not explicitly described or shown herein, embody the principles of the subject matter of the present disclosure. Moreover, all statements herein reciting principles, aspects, and embodiments of the subject matter of the present disclosure, as well as specific examples, are intended to encompass equivalents thereof. Yet further, for the sake of brevity, operation or working principles pertaining to the technical material that is known in the technical field of the present disclosure have not been described in detail so as not to unnecessarily obscure the present disclosure.

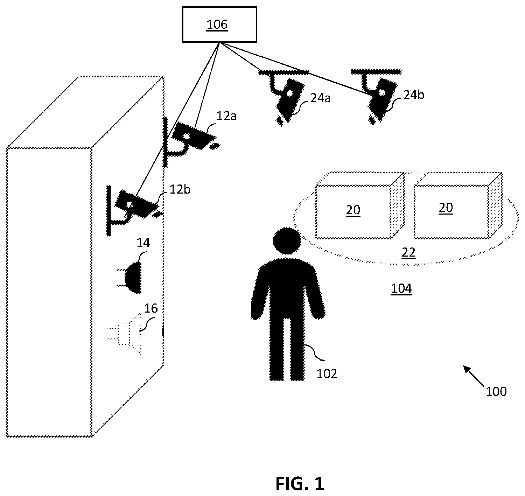

Referring to **FIG. 1,** an exemplary first environment **100** is disclosed, wherein various embodiments of the present invention can be practiced. The first environment **100** includes a user **102** in a goods receiving area **104** of a warehouse or a dealer location, a first set of cameras **12a** and **12b** (herinafter referred to as first video cameras **12),** a microphone **14,** a speaker **16,** and a second set of cameras **24a** and **24b** (hereinafter referred to as second video cameras **24).** The user 102 may be a delivery person, truck driver or the like, delivering one or more containers (for example pallets of boxes) of goods items (or returned goods items) to the goods receiving area **104.** The user **102** may be an authorised user who has been previously authorised (for example, by the location operators) to deliver goods items to the goods receiving area **104.**

The first video cameras **12** are installed at a first position of the goods receiving area **104.** Each of the first video cameras **12** may capture video footage of a region of the goods receiving area **104.** The said region may be within the field of view of the first video cameras **12.** The microphone **14** and speaker **16** may be located proximally to the first video cameras **12.** The second video cameras **24** may be placed a little farther from the first video cameras **12.** In an embodiment of the present disclosure, the first and second video cameras **12** and **18,** the microphone **14,** and the speaker **16** are controlled and managed by a goods receipt management system **106.**

In accordance with an embodiment of the present disclosure, the goods receipt management system **106** is configured to enable the speaker **16** to direct the user **102** to approach the first video cameras **12** when the user **102** enters the goods receiving area **104,** so that an image of the user **102** may be extracted from the video footage captured by the first video cameras **12.**

The goods receipt management system **106** is further configured to analyze the images captured by the first video cameras **12,** and identify the user **102** as an authorised person or otherwise. In the event, the user **102** is identified as an authorised person, the goods receipt management system **106** may use the microphone **14** and the speaker **16** to obtain further information from the user **102** and to direct the user **102** to place the goods items **20** in a designated zone **22** of the goods receiving area **104.**

In the context of the present disclosure, the designated zone **22** may be shown by painting the outline of a shape of the designated zone **22** on the floor of the goods receiving area **104.** Alternatively, the designated zone **22** may be shown by projecting an outline of a shape of the designated zone **22** on the floor of the goods receiving area **104** by an overhead projector (not shown). The skilled person will understand that the preferred embodiment is not limited to these mechanisms of showing the designated zone **22** to the user **102.** Instead, the preferred embodiment is operable with any suitable mechanism of showing the user **102,** the location and dimensions of the designated zone **22.**

In an embodiment of the present disclosure, the second video cameras **24** may be installed proximally to the designated zone **22,** wherein the second video cameras **24** are adapted to capture video footage of the goods items **20** placed in the designated zone **22.**

While **FIG. 1** shows the microphone **14** and the speaker **16** as separate components, the skilled person will understand that the preferred embodiment is not limited to this arrangement. Instead, the preferred embodiment is operable with any arrangement of the speaker and the microphone, including an integral arrangement thereof. Similarly, while **FIG. 1** shows the first video cameras **12** as being separate to the second video cameras **24,** the skilled person will understand that the preferred embodiment is not limited to this arrangement. Instead, the first video cameras **12** and the second video cameras **24** may be integrated together to capture video footage of the designated zone **22** and an image of the face of the user **102.**

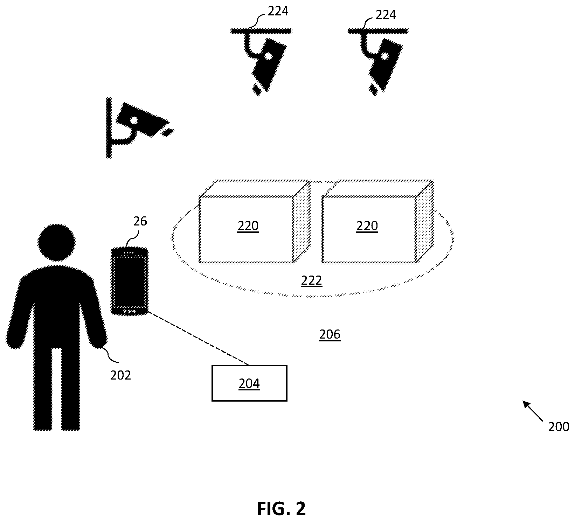

**FIG. 2** illustrates an exemplary second environment **200,** wherein various embodiments of the present disclosure can be practiced.

The second environment **200** includes a user **202,** a smart phone **26** in the possession of the user **202** and a goods receipt management system **204** communicatively coupled to the smart phone **26,** so that the goods receipt management system **204** may be adapted to receive and transmit data to and from the video camera(s), the microphone, and the speaker of the smart phone **26** to respectively identify and communicate with the user **202.** The goods receipt management system **204** may communicate with the smart phone **26** through a wired or a wireless network. In the second environment **200,** as the user **202** approaches a receiving area **206** of the warehouse, the goods receipt management system **204** may be adapted to request the user **202** to capture a self portrait ("selfie") of themselves using the camera of the smart phone **26** and to transmit the selfie to the goods receipt management system **204.** The goods receipt management system **204** may be adapted to receive the selfie and identify the user **202** as being an authorised person or otherwise.

In the event the user **202** is identified as an authorised person, the goods receipt management system **204** may be adapted to use the microphone, and the speaker of the smart phone **26** to obtain further information from the user **202** and to direct the user **202** to place the goods items **220** in a designated zone **222** of the goods receiving area **206.** The second environment **200** may further include one or more second video cameras **224** installed proximally to the designated zone **222,** wherein the second video cameras **224** may be adapted to capture video footage of the goods items **220** placed in the designated zone **222.**

In an aspect, the goods receipt management system **204** may be implemented as a cloud-based system and can be accessed by devices connected to the goods receipt management system though a communication network. The communication network may be a single network or a combination of multiple networks. The communication network may include one or more area networks, such as a local area network (LAN), a wide area network (WAN), an intranet, the internet, or any other type of network. In an example, the network may include a mobile communication network, for example, 2G, 3G, 4G, or 5G mobile communication network. The communication network may be coupled to one or more other networks, thereby providing coupling between a greater number of devices. Such can be the case, for example, when networks are coupled together via the Internet.

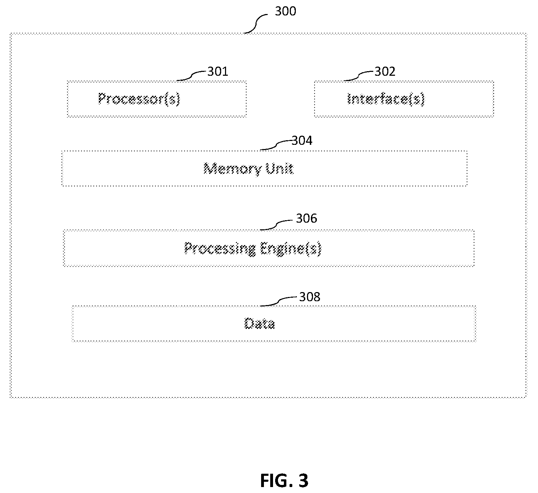

**FIG.3** is a block diagram illustrating a goods receipt management system **300** (similar to the goods receipt management system **106** and **204),** in accordance with an embodiment of the present disclosure. The goods receipt management system **300** includes one or more processors **301,** one or more interfaces **302,** and a memory unit **304.** Each processor **301** may be implemented as one or more microprocessors, microcomputers, microcontrollers, digital signal processors, logic circuitries, and/or any devices that manipulate data based on operational instructions. Among other capabilities, each processor **301** is configured to fetch and execute computer-readable instructions and one or more routines stored in the memory unit **304.** The memory unit **304** may store one or more computer-readable instructions or routines, which may be fetched and executed to manage goods receipt over a network service. The memory unit **304** may include any non-transitory storage device including, for example, volatile memory such as RAM, or non-volatile memory such as EPROM, flash memory, and the like.

The interface **302** may include a variety of interfaces, for example, interfaces for data input and output devices referred to as I/O devices, storage devices, and the like. The interface **302** may facilitate communication of the goods receipt management system **300** with various devices coupled thereto. The interface **302** may also provide a communication pathway for one or more components of the goods receipt management system **300.** Examples of such components include, but are not limited to, one or more processing engines **306** and data **308.** The data **308** may include data that is either stored or generated as a result of functionalities implemented by any of the components of the processing engine **306.**

The processing engine **306** may be implemented as a combination of hardware and programming (for example, programmable instructions) to implement one or more functionalities of each processing engine **306.** In examples described herein, such combinations of hardware and programming maybe implemented in several different ways. For example, the programming for each processing engine **306** may be processor executable instructions stored on a non-transitory machine-readable storage medium and the hardware for each processing engine **306** may include a processing resource (for example, one or more processors), to execute such instructions. In the present examples, the machine-readable storage medium may store instructions that, when executed by the processing resource, implement the processing engine **306.** In such examples, the goods receipt management system **300** may include the machine-readable storage medium storing the instructions and the processing resource to execute the instructions; or the machine-readable storage medium may be separate but accessible to the goods receipt management system and the processing resource. In other examples, the processing engine **306** may be implemented by electroniccircuitry.

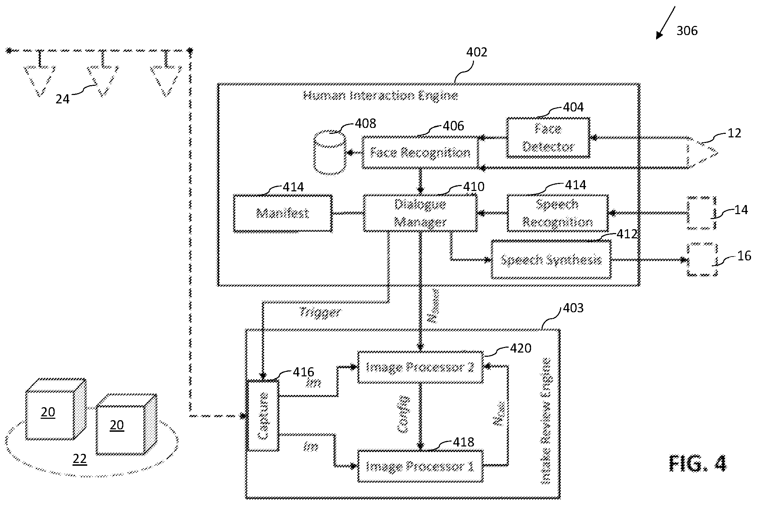

FIG. **4** is a block diagram illustrating the processing engine **306** in detail, in accordance with an embodiment of the present disclosure. The processing engine **306** includes a human interaction engine **402** and an intake review engine **403.** The human interaction engine **402** may be adapted to monitor and regulate interactions between the goods receipt management system and human users (not shown) thereof. The intake review engine **403** may be adapted to monitor and assess goods items received into corresponding goods receiving area of the location.

Specifically, the human interaction engine **402** may comprise a face detector engine **404** communicatively coupled with the first video camera **12** to receive video footage therefrom. The face detector engine **404** may employ a face detection algorithm to detect the presence of a human face in one or more video frames from the received video footage. The face detection algorithms may include one or more of the Viola-Jones face detector, Speeded Up Robust Features (SURF) cascades, Support Vector Machines (SVM) and Convolutional Neural Networks. The skilled person will recognize that the above algorithms are provided as examples only; and that goods receipt management system of the preferred embodiment is not limited to these algorithms. Instead, the goods receipt management system **300** of FIG. 3 is operable with any algorithm suitable for detecting the presence of a human face in one or more video frames.

On detection of a human face in one or more video frames from the received video footage, the face detector engine **404** may produce an output comprising a bounding box (not shown) positioned to enclose the human face and thereby provide co-ordinates for the location of the human face in each relevant video frame. The bounding box output may also alert the human interaction engine **402** that a human has been detected proximal to the receiving area of the location.

The human interaction engine **402** further includes a face recognition engine **406** communicatively coupled with the face detector engine **404,** an authorised persons database **408** and/or the first video camera 12. The authorised persons database **408** may include a pre-populated record comprising details of one or more authorised persons. These details may include facial details of each authorised person. For brevity, these facial details will be referred to henceforth to as the one or more stored facial records.

The authorised persons database **408** may also include name details of the or each authorised person, name details of the employer of each authorised person, access rights of each authorised person indicating those areas of the location to which each authorised person is allowed entry, and details of previous date/times at which each authorised person visited the location (possibly including video footage of those previous visits).

The skilled person will understand that the above details are provided for example purposes only, and that the preferred embodiment is in no way limited to the inclusion of these details in the authorised persons database **408.**

The face recognition engine **406** may be adapted to receive a bounding box from the face detector engine **404** and use this to pre-process each video frame containing the detected human face (for example, to centre the face in the or each video frame). The face recognition engine **406** may comprise a face recognition algorithm which may be adapted to compute facial details of the face detected in each video frame. For brevity, these facial details will be referred to henceforth as the requestor facial details.

The facial recognition algorithms employed by the face recognition engine **406** may include Support Vector Machines, Principal Component Analysis/Kernel Principal Component Analysis, Independent Component Analysis, Hidden Markov Models, Convolutional Neural Networks or Generative Adversarial Networks. The person skilled in the art will understand that the above face recognition algorithms are provided for example purposes only. In particular, the goods receipt management system of the preferred embodiment is in no way limited to these face recognition algorthms. Instead, the goods receipt management system of the preferred embodiment is operable with any face recognition algorithm which supports the recognition of a face detected in one or more video frames.

The face recognition engine **406** may be further adapted to interrogate the authorised persons database **408** and to use each face recognition algorithm to compare the requestor facial details against each stored facial record in the authorised persons database **408**. In the event, the face recognition engine **406** finds a close match between the requestor facial details and a stored facial record, the user (not shown) may be deemed to be the authorised person corresponding with the closest matching stored facial record.

On detection of a match, the face recognition engine **406** may be adapted to retrieve from the authorised persons database **408,** the details of corresponding authorised person. For brevity, these retrieved details will be referred to henceforth as the matching person details. The face recognition engine **406** may also be adapted to transmit each matching person detail to a dialogue manager **410** of the human interaction engine **402**. In the event, the face recognition engine **406** fails to find a match between the requestor facial detail and at least one of the stored facial records, the face recognition engine **406** may also be adapted to transmit a "No-Match" message to the dialogue manager **410**.

The dialogue manager **410** may include one or more dialogue rules which may be pre-configured by the the location operators. Each dialogue rule may comprise one or more narrative components and one or more logical components. These collectively define a framework for a choreographed bidirectional exchange of information between the authorised person and the goods receipt management system to guide the authorised person on a required protocol for delivering goods items to the location.

The dialogue manager **410** may be communicatively coupled with the face recognition engine **406** to receive therefrom the matching person. details. The dialogue manager **410** may be adapted to customise a dialogue by including any of the received matching person details into the or each narrative components of the dialogue framework. Specifically, the narrative components of the dialogue framework may comprise natural language textual elements, symbolic linguistic representations or a phonetic transcription thereof into which the name of the authorised person and/or their employer may be inserted. The logical components of the dialogue framework may include conditional logic units which may be pre-configured by the location operators. For example, the logical components may be operable to use any of the details of the matching person or information received from the authorised person to customize one or more narrative components of the dialogue framework and/or to deliver one or more narrative components from the dialogue framework to the authorised person.

The dialogue manager **410** may be communicatively coupled with a speech synthesis engine **412** and a speech recognition engine **414** to conduct a dialogue with the authorised person in accordance with the customized narrative components and the logical components of the dialogue framework. Specifically, the speech synthesis engine **412** may be adapted to receive the narrative components of the dialogue framework from the dialogue manager **410** and to convert the narrative components into speech. To this end, the speech synthesis engine **412** may employ concatentive or parametric speech synthesis algorithms, or may employ audio generative models based on Convolutional Neural Networks and/or Recurrent Neural Networks such as WaveNet, VoiceLoop and Tacotron. The skilled person will understand that these algorithms and audio generative models are provided as examples only. In particular, the skilled person will understand that the goods receipt management system of the preferred embodiment is not limited with these algorithms and audio generative models. Instead, the goods receipt management system of the preferred embodiment is operable with any speech synthesis algorithm capable of converting narrative components into speech. The speech synthesis engine **412** outputs the speech to the authorised person through the speaker **16**.

The bidirectional exchange of information in the dialogue framework, requires the dialogue manager **410** to receive information from the authorised person. To this end, the speech output to the authorised person may be designed to include prompts for information from the authorised person. More specifically, the speech output may include prompts in the form of questions to the authorised person. The speech output may also include direction to the authorised person to provide answers to the questions by speaking into the microphone 14. The microphone **14** may be adapted to detect and receive utterances from the authorised person and to transmit the utterances to the speech recognition engine **414**.

The speech recognition engine **414** may be adapted to receive the utterances from the microphone **14** and to use one or more automatic speech recognition algorithms to convert the utterances into text or other signals or coding elements or patterns that are understandable by the dialogue manager **410**. The automatic speech recognition algorithms may include Gaussian Mixture Model based Hidden Markov Models (GMM-HMM), K-Means Clustering, Expectation Maximisation (EM), Kernel Principal Component Analysis, Deep Belief Neural Networks (DBN), Recurrent Neural Network or Time Delay Neural Network (TDNN). The skilled person will recognize that these algorithms are provided as examples only. In particular, the skilled person will understand that the goods receipt management system of the preferred embodiment is not limited to the above-mentioned automatic speech recognition algorithms. Instead, the goods receipt management system of the preferred embodiment is operable with any automatic speech recognition algorithm which is capable of converting received utterances from the authorised person into one or more textual elements or coding elements or patterns that are understandable by the dialogue manager **410**. The speech recognition engine **414** may also be adapted to transmit the resulting the text, other signals or coding elements or patterns to the dialogue manager **410**.

On receipt of the text, other signals or coding elements or patterns from the speech recognition engine **414,** the dialogue manager **410** may be adapted to execute the logical components of the dialogue framework to customize narrative components of the dialogue framework and/or to deliver further narrative components from the dialogue framework to the authorised person.

The dialogue manager **410** may further be communicatively coupled with a manifest unit **414.** The manifest unit **414** may include details of deliveries to the location expected on a given day. The details may include any of the supplier name, the delivery person, the identity of the or each goods items to be delivered and the number of said goods items. The skilled person will understand that these details are provided as examples only. In particular, the skilled person will understand that the preferred embodiment is not limited to the inclusion of the above details. Instead, the preferred embodiment is operable with any record which provides a facility for cross-checking and validating a delivery to the location.

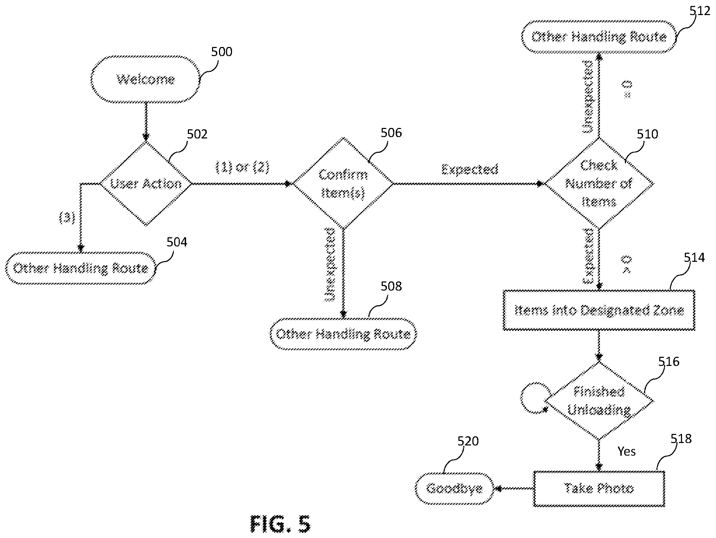

FIG. 5 is a flowchart illustrating an exemplary dialogue of the dialogue manager **410** with an authorised person, in accordance with an embodiment of the present disclosure. The dialogue manager **410** uses the narrative components and the logical components of the dialogue framework, along with the speech synthesis engine **412,** and the speech recognition engine **414** to execute the following exemplary dialogue with the authorised person:

> At step **500** a narrative component welcomes the authorised person.
> *"Welcome [NAME] From[Company]"*
> At step **502** a logical component asks the authorised person what action they want to perform.
> *"Are you (1) delivering goods items today; or (2) returning goods items today or (3) other ?"*
> At step **504** a narrative component requests the authorised person to follow an alternative route in the event the authorised person selected option 3 in response to step **502.**
> *"Please go to reception"*
> At step **506** a logical component requests the authorised person to confirm the items they are delivering to the location, in the event the authorised person selected option (1) or (2) in response to step **502.**
> *"What item(s) are your delivering today?"*
> At step **508** a narrative component requests the authorised person to follow an alternative route in the event the authorised person's response to step 506 does not match with details contained in the manifest unit **414.**
> *"Please go to reception"*
> At step **510** a logical component requests the authorised person to confirm the number of items they are delivering to the location, in the event the authorised person's response to step **506** matches with details contained in the manifest unit **414.**
> *"How many goods items are you delivering/returning today ?"*
> At step **512** a narrative component requests the authorised person to follow an alternative route in the event the number of items stated by the user in response to step 510 is zero.
> *"Please go to reception"*
> At step **514** a narrative component requests the authorised person to put into a designated zone the goods items being delivered to the location in the event the number of items stated by the user in response to step **510** is greater than zero.
> *"Please put the pallet with the goods into the shown designated receiving zone."*
> At step **516** a logical component requests the authorised person to confirm that they have finished putting the goods items into the designated zone.
> *"Have you finished unloading ?"*
> At step **518** a narrative component advises the authorised person that a snapshot picture of the designated zone (and the goods items loaded therein) when the authorised person's response to step **516** is 'yes'
> *"Please wait while we take a picture of the pallet*
> At step **520** a narrative component closes the dialogue by issuing a closing pleasantry.
> *"Thanks very much. Goodbye"*
> Step **516** is repeated when the authorised person's response thereto is 'no'.
> *"Have you finished unloading?"*

The skilled person will understand that the above dialogue is provided as an example only. In particular, the skilled person will understand that the preferred embodiment is in no way limited to the above dialogue. Instead, the preferred embodiment is operable with any dialogue or dialogue framework which may be configurable by the location operators, which includes information from the manifest unit **414** to support further automatic checking and validation of the incoming delivery.

Refering back to **FIG.4,** the dialogue manager **410** may further be adapted to receive a "No-Match" message from the face recognition engine **406.** The dialogue manager **410** may further be adapted **406** to issue a dialogue framework to the speech synthesis engine **412** on receipt of a "No-Match" message from the face recognition engine **406.** The narrative components of the issued dialogue framework may include a message stating, for example, that the location is a restricted access property and directing the detected person to a reception area for further assistance. The person skilled in the art will understand that the above narrative component is provided as an example only and that the preferred embodiment is not in any way limited to this narrative component. On the contrary, the preferred embodiment is operable with any narrative component in response to the "No Match" message which may be configurable by the location operators.

On receipt (for example, in response to step **516** in **FIG.5**) of an indication that the authorised person has finished putting each goods item **20** in the designated zone **22,** the dialogue manager **410** may issue a triggering signal (*Trigger*) to a capture engine **416** of the intake review engine **403.** On receipt of the triggering signal (*Trigger*), the capture engine **416** may be adapted to receive from the second video cameras **24** one or more video frames of the designated zone **22** and the goods item(s) **20** put therein. The capture engine **416** may be communicatively coupled with first and second image processing engines **418** and **420** to transmit thereto the video frames (*Im*) received from the second video cameras **24.**

The dialogue manager **410** may also be adapted to transmit to the second image processing engine **420,** the received statement (for example, in response to step **510** in **FIG.5**) from the authorised person regarding the number ($N_{Stated}$) of goods items being delivered to the location. In a further embodiment, the dialogue manager **410** may also be adapted to transmit to the second image processing engine **420,** information from the manifest unit **414** regarding the expected number of goods items to be delivered to the location by the relevant supplier that corresponding day.

The first and second image processing engines **418** and **420** may include a plurality of algorithms employing a plurality of models. The operational performance of at least some of the algorithms may be at least partly determined by a plurality of tunable parameters, hyperparameters or other aspects of each model or algorithm or both. For brevity, the tunable parameters, hyperparameters or other aspects of each model or each algorithm or both will be referred to henceforth as configuration variables. One or more values of the configuration variables may be previously initialised using a training set. The training set may comprise a plurality of video frames from the second video cameras **24** (or from other video cameras arranged in a similar manner), wherein the video frames may include different numbers of different types of goods items placed in different arrangements in the designated zone **22** (or other comparable area). The training set may also include corresponding details of the number and types of goods items appearing in substantially each video frame.

The first and second image processing engines **418** and **420** may be arranged in a feedback loop which may be adapted to provide real-time, ongoing, recurrent training and refinement of the first and second image processing engines **418** and **420.** Specifically, the first image processing engine **418** may be adapted to operate in two modes, namely a run-time mode and a refinement mode. While operating in the run-time mode, the first image processing engine **418** may be adapted to receive each video frame (*Im*) from the second video cameras **24** to identify and quantify the number of goods items 20 in the designated zone **22.** While operating in the refinement mode, the first image processing engine **418** may be adapted to receive, from the second image processing engine **420,** updates to the configuration variables of the first image processing engine **418.** The first image processing engine **418** may be further adapted to implement each such update.

The second image processing engine **420** may also be adapted to receive each video frame (*Im*) from the second video cameras **24** and to use this together with the additional information (i.e. the authorised person's statement as to the number ($N_{Stated}$) of goods items being delivered to the location) provided by the dialogue manager **410** to provide continuing assessment and improvement to the performance of the first image processing engine **418** and adaptation to changing environmental variables (e.g. lighting, goods items stacking patterns, presence of dirt or debris in the designated zone). The second image processing engine **420** may be adapted to do the above, by ongoing tuning of the configuration variables and provision to the first image processing engine **418** of the resulting updates to the configuration variables.

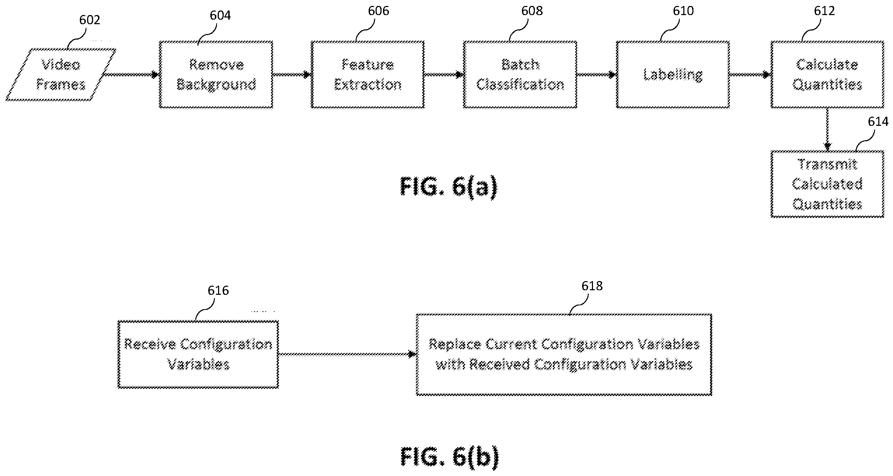

Referring to **FIG. 6(a)** together with **FIG. 4,** in the run-time operational mode, the first image processing engine **418** is adapted to receive each video frame (*Im*) at step **602,** and to remove therefrom the background around and between goods items in the designated zone **22** at step **604.** Specifically, the first image processing engine **418** may use one or more image segmentation algorithms including mask division (including Mask Region-Based Convolutional Neural Networks (mask R-CNN), threshold segmentation and the like, to remove the background from each video frame (*Im*) wherein the background may include regions between adjacent, spaced apart goods items **20.** The skilled person will understand that the above image segmentation algorithms are provided as examples only. In particular, the skilled person will understand that the preferred embodiment is in no way limited to the use of these image segmentation algorithms. Instead, the preferred embodiment is operable with any algorithm capable of separating the goods items **20** from the background in a video frame of the designated zone **22.** For brevity, a video frame from which the background has been removed will be referred to henceforth as "First Step Video Frame".

On removal of the background from the received video frames (*Im*), the first image processing engine **418** may be adapted to employ one or more feature detection algorithms at step **606** to extract one or more key features from each First Step Video Frame. The key features may comprise a number of colors, type of colors, distribution of colors, detected edges and detected corners in each First Step Video Frame. The feature detection algorithms may include the Scale Invariant Feature Transform (SIFT) algorithm, the Sobel transform, the level curve curvature algorithm, the maximally stable extremal regions (MSER) algorithm and the principal curvature-based region detector. The skilled person will understand that the above key features and feature detection algorithms are provided as examples only. In particular, the skilled person will understand that the preferred embodiment is in no way limited to the use of the above key features and feature detection algorithms. Instead, the preferred embodiment is operable with any key features or feature detection algorithm or both, capable of facilitating the classification of goods items in a video frame. For brevity, a video frame from which the key features have been extracted will be referred to henceforth as "Second Step Video Frame".

Using the extracted key features, the first image processing engine **418** may be adapted to use one or more object classification algorithms to determine at step **608,** the batch classification of one or more groups of similar goods items appearing in the Second Step Video Frame. The process of determining the batch classification may include a localization step comprising the provision of bounding boxes around groups of similar goods items in the Second Step Video Frame. The object classification algorithms may include Region-Based Convolutional Neural Networks (R-CNN), You Only Look Once (YOLO) algorithms or the like. The skilled person will understand that the above object classification algorithms are provided as examples only. In particular, the skilled person will understand that the preferred embodiment is in no way limited to the use of these object classification algorithms. Instead, the preferred embodiment is operable with any object classification algorithm capable of determining the or each batch classification of one or more groups of similar goods items appearing in a video frame. For brevity, a video frame in which groups of similar goods items have been batch classified (and one or more bounding boxes may have been created enclosing each of the said groups) will be referred to henceforth as "Third Step Video Frame".

Using the batch classifications of each group of similar goods items (and optionally using the bounding box enclosing said group) appearing in the Third Step Video Frame, the first image processing engine **418** may be adapted to use a labelling algorithm at step **610** to label such goods items. The first image processing engine **418** may further be adapted to use a label counting algorithm at step **612** to calculate the number ($N_{Calc}$) of different goods items with matching labels appearing in the Third Step Video Frame. In this way, the first image processing engine **418** may be adapted to determine the number of different types of goods items placed by the authorised person in the designated zone **22**.

Consequently, the first image processing engine **418** enables the goods receipt management system to maintain a record of the numbers of goods items of different types received at any given moment at the location. This in turn supports effective stock control and inventory management at the location. To support its ongoing improvement, at step **614,** the first image processing engine **418** may be adapted to transmit to the second image processing engine **420** the calculated number ($N_{Calc}$) of different goods items with matching labels.

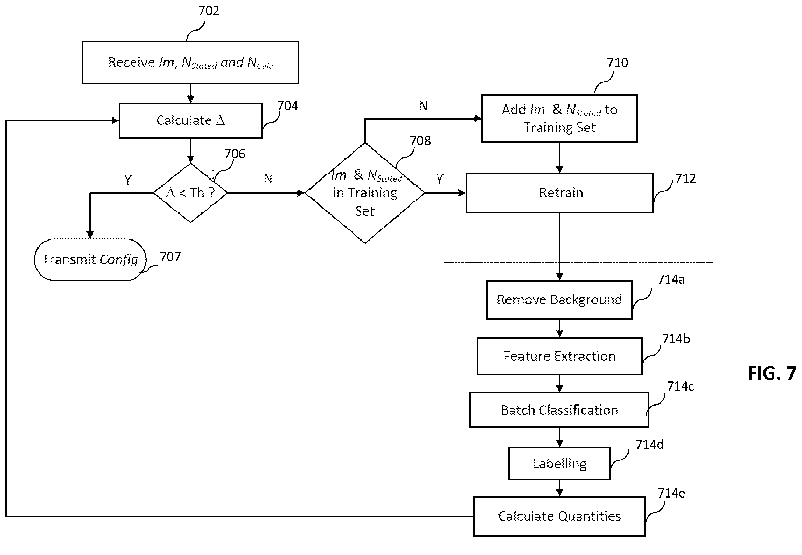

Referring to **FIG. 7** together with **FIG. 4**, at step **702,** the second image processing engine **420** is adapted to receive video frames (*Im*) from the second video camera **24;** the calculated number ($N_{Calc}$) of different types of goods items put by the authorised person in the designated zone **22** from the first image processing engine **418;** and the authorised person's statement as to the number ($N_{Stated}$) of goods items being delivered to the location from the dialogue manager **410**.

At step **704,** the second image processing engine **420** may be further adapted to calculate the difference (Δ) between the authorised person's statement as to the number of goods items being delivered to the location and the number of goods items calculated by the first image processing engine **418,** using expression (1) below

$$\Delta = |N_{Stated} - N_{Calc}| \qquad\qquad (1)$$

The person skilled in the art will understand that the above expression is provided for example purposes only. In particular, the preferred embodiment is in no way limited to the above expression for calculating the difference. Instead, the preferred embodiment is operable with any expression suitable for assessing a difference between the authorised person's statement as to the number of goods items being delivered to the location and the number of goods items calculated by the first image processing engine **418,** including for further example, a squared difference or a weighted difference expression.

At step **706,** the second image processing engine **420** may be adapted to compare the difference (Δ) with a tolerance threshold value (Th) whose value may be preconfigured by the location operators. In the event the difference (Δ) is less than the tolerance threshold value (Th), then at step **707,** the second image processing engine **420** is adapted to transmit its current configuration variables (*Config*) to the first image processing engine **418**.

In the event the difference Δ is greater than or equal to the tolerance threshold value (Th), at step **708,** the second image processing engine **420** may be adapted to check if the received video frames (*Im*) from the second video cameras **24** and the authorised person's stated number ($N_{Stated}$) of delivered goods items are contained in the training set. In the event, the training set does not contain the received video frames (*Im*) and the authorised person's stated number ($N_{Stated}$) of delivered goods items, the second image processing engine **420** may be adapted to add them to the training set at step **710**.

Following the addition to the training set of the received video frames (*Im*) and the authorised person's stated number ($N_{Stated}$) of delivered goods items, the second image processing engine **420** may be adapted to use the training set, at step **712,** to re-train each model or each algorithm or both employed by the second image processing engine **420**. In the process, the second image processing engine **420** effectively re-tunes its configuration variables.

The second image processing engine **420** may be adapted to reassess its performance with the re-tuned configuration variables using the received video frames (*Im*). To perform the reassessment, the second image processing engine **420** may be adapted to use the re-tuned configuration parameters to implement substantially the same processes as those implemented by the first image processing engine **418,** namely:

- at step **714a,** removing from each video frame (*Im*), the background around and between goods items in the designated zone **22;.**

- at step **714b,** extracting one or more key features from the or each First Step Video Frame;

- at step **714c,** determining the batch classification of one or more groups of similar goods items appearing in the Second Step Video Frame

- at step **714d,** labelling the goods items appearing in the Third Step Video Frame; and

- at step **714e,** calculating the number ( $N_{Calc}^*$ ) of different goods items placed by the authorised person in the designated zone **22.**

In an embodiment of the present disclosure, the second image processing engine **420** may further be adapted, at step **704,** to calculate the difference ($\Delta$) between the authorised person's statement as to the number of goods items being delivered to the location and the number of goods items calculated by the second image processing engine **420,** using expression (2) below

$$\Delta = \left| N_{Stated} - N_{Calc}^* \right| \qquad (2)$$

The person skilled in the art will understand that the above expression is provided for example purposes only. In particular, the preferred embodiment is in no way limited to the above expression for calculating the difference. Instead, the preferred embodiment is operable with any expression suitable for assessing a difference between the authorised person's statement as to the number of goods items being delivered to the location and the number of goods items calculated by the second image processing engine **420,** including for further example, a squared difference or a weighted difference expression.

At step **706,** the second image processing engine **420** may be adapted to compare the difference ($\Delta$) with the tolerance threshold value (Th). In the event the difference ($\Delta$) is less than a tolerance threshold value (Th), the second image processing engine **420** may be adapted, at step **708,** to transmit its current configuration variables *(Config)* to the first image processing engine **418.** But in the event, the difference ($\Delta$) is greater than or equal to the tolerance threshold value (Th), the second image processing engine **420** may be adapted to further re-train each model or each algorithm or both employed by the second image processing engine **420.**

In the event that after a pre-configured number of iterations of retraining each model or each algorithm or both employed by the second image processing engine **420,** the difference ($\Delta$) does not significantly improve with respect to the tolerance threshold value (Th), the authorised person's statement as to the number of goods items being delivered to the location is most likely to be incorrect. In this case, the second image processing engine **420** may be adapted to retain a record of the event, notify the location operators of the same, and request the authorised person to await the arrival of human investigators.

Referring to **FIG. 6(b)** the first image processing engine **418** may be adapted to receive the configuration variables *(Config)* from the second image processing engine **420** at step **616** and replace its current configuration variables at step **618** with those newly received. In this way, the models of the first image processing engine **418** are continually refreshed and improved as deliveries are made to the location.

In some embodiments, the retraining of the quantification engine is performed exclusively when a mismatch is detected between the calculated number of goods items and the stated number of goods items provided by the authorised person. This selective retraining approach avoids unnecessary model updates and ensures efficient use of computational resources.

Furthermore, the quantification engine may store and apply configuration variables that are dynamically adjusted in response to environmental factors such as variations in lighting, stacking patterns of goods, or the presence of dirt or debris within the designated capture zone. By adapting these configuration variables, the system maintains accurate quantification even under changing warehouse conditions.

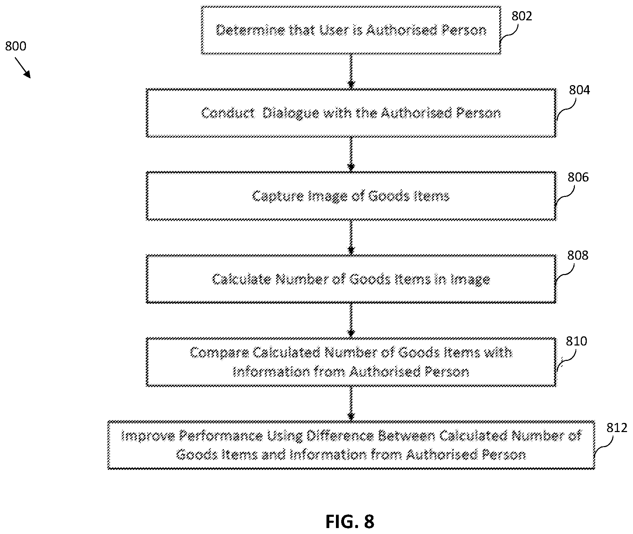

**FIG. 8** illustrates a method **800** for operating a goods receipt management system, according to an implementation of the present disclosure. The order in which the method **800** is described is not intended to be construed as a limitation, and any number of the described method blocks can be combined in any appropriate order to carry out the method **800** or an alternative method. Additionally, individual blocks may be deleted from the method 800 without departing from the scope of the subject matter as defined in the claims.

The method **800** can be performed by programmed computing devices, for example, based on instructions retrieved from the non-transitory computer-readable medium or non-transitory computer-readable media. The computer-readable media can include machine-executable or computer-executable instructions to perform all or portions of the described method. The computer-readable media may be, for example, digital memories, magnetic storage media, such as magnetic disks and magnetic tapes, hard drives, or optically readable data storage media.

At step **802,** the method **800** includes determining that a user is an authorised person. In an aspect, the determination is performed by using a face recognition algorithm to compute one or more facial details of the user from an image of the face of the user and to compare the computed facial details with previously stored facial details of authorised persons to find a match therewith.

At step **804,** the method **800** includes conducting a dialogue with the authorised person to receive information from the authorised person regarding the number of goods items being delivered; and to direct the authorised person to place the goods items in the designated zone. In an aspect, the conducting comprises converting one or more preconfigured narrative components into synthetic speech, receiving and interpreting utterances from the authorised person, and responding thereto. In another aspect, the conducting comprises interrogating a manifest unit detailing expected deliveries at the location, to retrieve therefrom the relevant information.

At step **806,** the method **800** includes capturing images of the goods items in the designated zone.

At step **808,** the method **800** includes calculating the number of goods items in the designated from the images. In an aspect, the calculating comprises removing from the images, the background around and between goods items; extracting one or more key features from the resulting image; determining a batch classification of one or more groups of similar goods items appearing in the resulting image; labelling the goods items; and calculating the number of goods items with matching labels to calculate the number of different types of goods items placed by the authorised person in the designated zone.

At step **810,** the method **800** includes comparing the calculated number of goods items with information received from the authorised person during the dialogue therewith.

At step **812,** the method **800** includes using the difference between the calculated number of goods items with the information received from the authorised person to improve the performance of the method 800. In an aspect, the using comprises adding the image and the calculated number of goods items to a pre-configured training set of data; re-training with the training set, models used by the method; reassessing the performance of the method with the retrained models; and repeating the retraining and reassessing steps until a required level of performance is achieved.

The above description does not provide specific details of the manufacture or design of the various components. Those of skill in the art are familiar with such details, and unless departures from those techniques are set out, techniques, known, related art or later developed designs and materials should be employed. Those in the art can choose suitable manufacturing and design details.

Note that throughout the disclosure, numerous references may be made regarding servers, services, engines, modules, interfaces, portals, platforms, or other systems formed from computing devices. It should be appreciated that the use of such terms is deemed to represent one or more computing devices having at least one processor configured to or programmed to execute software instructions stored on a computer-readable tangible, non- transitory medium or also referred to as a processor-readable medium. For example, a server can include one or more computers operating as a web server, database server, or another type of computer server in a manner to fulfill described roles, responsibilities, or functions. Within the context of this document, the disclosed devices or systems are also deemed to comprise computing devices having a processor and a non-transitory memory storing instructions executable by the processor that cause the device to control, manage, or otherwise manipulate the features of the devices orsystems.

It should be understood, however, that all of these and similar terms are to be associated with the appropriate physical quantities and are merely convenient labels applied to these quantities. Unless specifically stated otherwise, as apparent from the discussion herein, it is appreciated that throughout the description, discussions utilizing terms such as "receiving," or "authenticating," or "facilitating," or "executing," or "capturing," or the like, refer to the action and processes of a computer system, or similar electronic computing device, that manipulates and transforms data represented as physical (electronic) quantities within the computer system's registers and memories into other data similarly represented as physical quantities within the computersystem memories or registers or other such information storage, transmission or display devices.

The exemplary embodiment also relates to an apparatus for performing the operations discussed herein. This apparatus may be specially constructed for the required purposes, or it may comprise a general-purpose computer selectively activated or reconfigured by a computer program stored in the computer. Such a computer program may be stored in a computer-readable storage medium, such as, but is not limited to, any type of disk including floppy disks, optical disks, CD- ROMs, and magnetic-optical disks, read-only memories (ROMs), random access memories (RAMs), EPROMs, EEPROMs, magnetic or optical cards, or any type of media suitable for storing electronic instructions, and each coupled to a computer system bus.

Further, the terminology used herein is for the purpose of describing particular embodiments only and is not intended to be limiting of the disclosure. It will be appreciated that several of the above-disclosed and other features and functions, or alternatives thereof, may be combined into other systems or applications. Various modifications, variations, or improvements therein may subsequently be made by those skilled in the art without departing from the scope of the present disclosure as encompassed by the following claims.

**Claims**

1. A goods receipt management system (106) comprising:

    a non-transitory storage device having embodied therein one or more routines to manage the receipt of goods items at a location; and
    one or more processors coupled to the non-transitory storage device and operable to execute the one or more routines, wherein the one or more routines include:

        a face recognition engine (406), which when executed by the one or more processors, uses one or more facial features of a user to recognize the user as an authorised person;
        a dialogue manager engine (410), which when executed by the one or more processors, obtains from the authorised person, a stated number of goods items being delivered;
        a quantification engine, which when executed by the one or more processors, receives an image of the goods items, removes background content from the image, extracts features of the goods items, classifies and labels the goods items, and calculates the number of goods items appearing in the image;

        a comparison engine, which when executed by the one or more processors, compares the calculated number of goods items with the stated number of goods items, and in the event of a substantial match, records the calculated number of goods items; and
        a performance improvement engine, which when executed by the one or more processors, retrains the quantification engine exclusively when the calculated number of goods items does not match the stated number of goods items, and updates one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone.

2. The system (106) of claim 1, wherein the quantification engine is configured to:

    remove the background around and between goods items from the image;
    extract one or more key features from the image;
    determine a batch classification of one or more groups of similar goods items appearing in the image;
    label each goods item appearing in the image; and
    calculate the number of labels and number of goods items with matching labels appearing in the image.

3. The system (106) of claim 1, wherein the performance improvement engine is configured to:

    add the image and the calculated number of goods items to a pre-configured training set of data;
    re-train one or more models used by the performance improvement engine with the training set;
    reassess the performance of the performance improvement engine with the retrained models;
    repeat the retraining and reassessment until a pre-defined level of performance is achieved; and
    replace the configuration variables of the quantification engine with those of the retrained models of the performance improvement engine;
    and optionally
    wherein the performance improvement engine is configured to:

        remove from each image in the training set, the background around and between goods items;
        extract one or more key features from each image in the training set;
        determine a batch classification of one or more groups of similar goods items appearing in each image in the training set;
        label each goods item appearing in each image of the training set;
        calculate the number of labels and number of goods items with matching labels appearing in each image in the training set; and
compare the calculated number of goods items with a corresponding number of goods items for each image contained in the training set.

4. The system (106) of claim 1, wherein the dialogue manager engine is configured to:

convert one or more preconfigured narrative components into synthetic speech using a speech synthesis algorithm and play the speech to the authorised person;
receive and interpret utterances from the authorised person using a speech recognition algorithm; and
respond to the received utterances.

5. The system (106) of claim 4, wherein the dialogue manager engine is configured to use a speech synthesis algorithm selected from the set of speech synthesis algorithms comprising concatenative speech synthesis algorithms, parametric speech synthesis algorithms and audio generative models based on Convolutional Neural Networks, Recurrent Neural Networks or both; and/or
wherein the dialogue manager engine is configured to use a speech recognition algorithm selected from the set of speech recognition algorithms comprising Gaussian Mixture Model based Hidden Markov Models (GMM-HMM), K-Means Clustering, Expectation Maximisation [EM], Kernel Principal Component Analysis, Deep Belief Neural Networks (DBN), Recurrent Neural Networks and Time Delay Neural Networks (TDNN).

6. The system (106) of claim 1, wherein the face recognition engine is configured to receive an image of the user and to use a face recognition algorithm to compute the one or more facial features of the user from the image; and compare each computed facial detail against one or more stored facial details of one or more authorised persons.

7. The system (106) of claim 6, wherein the face recognition engine is configured to use a face recognition algorithm selected from the set of face recognition algorithms comprising Support Vector Machines, Principal Component Analysis/Kernel Principal Component Analysis, Independent Component Analysis, Hidden Markov Models, Convolutional Neural Networks and Generative Adversarial Networks.

8. The system (106) of claim 6, wherein the face recognition engine is configured to use a face detection algorithm to detect the presence of a human face in the image prior to computing therefrom, the one or more facial features of the user; and optionally
wherein the face recognition engine is configured to use a face detection algorithm selected from the set of face detection algorithms comprising the Viola-Jones face detector, Speeded Up Robust Features (SURF) cascades, Support Vector Machines (SVM) and Convolutional Neural Networks.

9. A method for managing the receipt of goods at a location, comprising the steps of:

recognizing, by a face recognition engine (406) executed by one or more processors, a user as an authorised person using one or more facial features of the user;
obtaining, by a dialogue manager engine (410) executed by the one or more processors, from the authorised person a stated number of goods items being delivered;
receiving, by a quantification engine executed by the one or more processors, an image of the goods items;
removing, by the quantification engine, background content from the image;
extracting, by the quantification engine, features of the goods items;
classifying and labelling, by the quantification engine, the goods items based on the extracted features;
calculating, by the quantification engine, the number of goods items appearing in the image;
comparing, by a comparison engine executed by the one or more processors, the calculated number of goods items with the stated number of goods items;
recording, by the comparison engine, the calculated number of goods items in the event of a substantial match between the calculated number of goods items and the stated number of goods items; and

retraining, by a performance improvement engine executed by the one or more processors, the quantification engine exclusively when the calculated number of goods items does not match the stated number of goods items, and updating one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone.

10. The method of claim 9, wherein the step of calculating the number of goods items appearing in the image comprises the steps of:

removing from the image, the background around and between goods items;
extracting one or more key features from the image;
determining a batch classification of one or more groups of similar goods items appearing in the image;
labelling each goods item appearing in the image; and
calculating the number of labels and number of goods items with matching labels appearing in the image.

11. The method of claim 9, wherein the step of re-tuning one or more configuration variables comprises the steps of:

adding the image and the calculated number of goods items to a pre-configured training set of data;
re-training one or more models used by the method with the training set, to produce the re-tuned configuration variables;
reassessing the performance of the method with the retrained models;
repeating the retraining and reassessment until a pre-defined level of performance is achieved; and
replacing the configuration variables with the re-tuned configuration variables;
and optionally
wherein the step of reassessing the performance of the method with the retrained models comprises the steps of:

removing from the image, the background around and between goods items;
extracting one or more key features from the image;
determining a batch classification of one or more groups of similar goods items appearing in the image;
labelling each goods item appearing in the image;
calculating the number of labels and number of goods items with matching labels appearing in the image; and
comparing the calculated number of goods items with the stated number of goods items.

12. The method of claim 9, wherein the step of obtaining a stated number of goods items being delivered from the authorised person, comprises the steps of:

converting one or more preconfigured narrative components into synthetic speech using a speech synthesis algorithm and playing the speech to the authorised person;
receiving and interpreting utterances from the authorised person using a speech recognition algorithm; and
responding to the received utterances.

13. The method of claim 12, wherein the step converting one or more preconfigured narrative components into synthetic speech and playing the speech to the authorised person comprises the step of using a speech synthesis algorithm selected from the set of speech synthesis algorithms comprising concatenative speech synthesis algorithms, parametric speech synthesis algorithms and audio generative models based on Convolutional Neural Networks, Recurrent Neural Networks or both; and/or
wherein the step of receiving and interpreting utterances from the authorised person comprises the step of using a speech recognition algorithm selected from the set of speech recognition algorithms comprising Gaussian Mixture Model based Hidden Markov Models (GMM-HMM), K-Means Clustering, Expectation Maximisation [EM], Kernel Principal Component Analysis, Deep Belief Neural Networks (DBN), Recurrent Neural Networks and Time Delay Neural Networks (TDNN).

14. The method of claim 9, wherein the step of using one or more facial features of a user to recognize the user as an authorised person comprises the steps of:

receiving an image of the user;
using a face recognition algorithm to compute the one or more facial features of the user from the image; and
comparing each computed facial detail against one or more stored facial details of one or more authorised persons.

15. A non-transitory computer readable medium configured to store a program causing a computer to manage the receipt of goods at a location, said program configured to:

recognize a user as an authorised person by using one or more facial features of the user;

obtain from the authorised person a stated number of goods items being delivered;

receive an image of the goods items;

remove background content from the image;

extract features of the goods items;

classify and label the goods items based on the extracted features;

calculate the number of goods items appearing in the image;

compare the calculated number of goods items with the stated number of goods items;

record the calculated number of goods items in the event of a substantial match between the calculated number of goods items and the stated number of goods items; and

retrain the quantification engine exclusively when the calculated number of goods items does not match the stated number of goods items, and update one or more configuration variables of the quantification engine using the image associated with the mismatch, wherein the configuration variables include configuration variables for adapting to environmental variables, the environmental variables comprising at least lighting, goods items stacking patterns, and the presence of dirt or debris in a designated zone.

**Patentansprüche**

1. Wareneingangsverwaltungssystem (106), umfassend:

   eine nichtflüchtige Speichervorrichtung, die eine oder mehrere Routinen zur Eingangsverwaltung von Warenartikeln an einem Standort darin eingebettet aufweist; und

   einen oder mehrere Prozessoren, die mit der nichtflüchtigen Speichervorrichtung gekoppelt und zur Ausführung der einen oder mehreren Routinen betriebsfähig sind, wobei die eine oder mehreren Routinen einschließen:

   eine Gesichtserkennungs-Engine (406), die, wenn sie von dem einen oder den mehreren Prozessoren ausgeführt wird, ein oder mehrere Gesichtsmerkmale eines Benutzers verwendet, um den Benutzer als autorisierte Person zu erkennen;

   eine Dialogverwaltungs-Engine (410), die, wenn sie von dem einen oder den mehreren Prozessoren ausgeführt wird, von der autorisierten Person eine angegebene Anzahl von Warenartikeln erhält, die ausgeliefert werden;

   eine Quantifizierungs-Engine, die, wenn sie von dem einen oder den mehreren Prozessoren ausgeführt wird, ein Bild der Warenartikel empfängt, Hintergrundinhalt aus dem Bild entfernt, Merkmale der Warenartikel extrahiert, die Warenartikel klassifiziert und kennzeichnet und die Anzahl der im Bild erscheinenden Warenartikel berechnet;

   eine Vergleichs-Engine, die, wenn sie von dem einen oder den mehreren Prozessoren ausgeführt wird, die berechnete Anzahl der Warenartikel mit der angegebenen Anzahl der Warenartikel vergleicht und im Falle einer wesentlichen Übereinstimmung die berechnete Anzahl der Warenartikel aufzeichnet; und

   eine Leistungsverbesserungs-Engine, die, wenn sie von dem einen oder den mehreren Prozessoren ausgeführt wird, die Quantifizierungs-Engine ausschließlich dann erneut trainiert, wenn die berechnete Anzahl der Warenartikel nicht mit der angegebenen Anzahl der Warenartikel übereinstimmt, und eine oder mehrere Konfigurationsvariablen der Quantifizierungs-Engine unter Verwendung des Bildes aktualisiert, das mit der Abweichung verknüpft ist, wobei die Konfigurationsvariablen Konfigurationsvariablen zur Anpassung an Umgebungsvariablen einschließen, wobei die Umgebungsvariablen mindestens die Beleuchtung, die Stapelmuster der Warenartikel und das Vorhandensein von Schmutz oder Ablagerungen in einer ausgewiesenen Zone einschließen.

2. System (106) nach Anspruch 1, wobei die Quantifizierungs-Engine konfiguriert ist zum:

   Entfernen des Hintergrunds um und zwischen den Warenartikeln aus dem Bild;

   Extrahieren eines oder mehrerer Schlüsselmerkmale aus dem Bild;

   Bestimmen einer Chargenklassifizierung einer oder mehrerer Gruppen ähnlicher Warenartikel, die im Bild erscheinen;

   Kennzeichnen jedes im Bild erscheinenden Warenartikels; und

   Berechnen der Anzahl der Kennzeichnungen und der Anzahl der Warenartikel mit übereinstimmenden Kennzeichnungen, die im Bild erscheinen.

3. System (106) nach Anspruch 1, wobei die Leistungsverbesserungs-Engine konfiguriert ist zum:

Hinzufügen des Bildes und der berechneten Anzahl der Warenartikel zu einem vorkonfigurierten Trainingsdatensatz;

erneuten Trainieren eines oder mehrerer Modelle, die von der Leistungsverbesserungs-Engine verwendet werden, mit dem Trainingsdatensatz;

erneuten Bewerten der Leistung der Leistungsverbesserungs-Engine mit den erneut trainierten Modellen;

Wiederholen des erneuten Trainings und der erneuten Bewertung, bis ein vordefiniertes Leistungsniveau erreicht ist; und

Ersetzen der Konfigurationsvariablen der Quantifizierungs-Engine durch diejenigen der erneut trainierten Modelle der Leistungsverbesserungs-Engine;

und optional

wobei die Leistungsverbesserungs-Engine konfiguriert ist zum:

Entfernen des Hintergrunds um und zwischen den Warenartikeln aus jedem Bild im Trainingsdatensatz;

Extrahieren eines oder mehrerer Schlüsselmerkmale aus jedem Bild im Trainingsdatensatz;

Bestimmen einer Chargenklassifizierung einer oder mehrerer Gruppen ähnlicher Warenartikel, die in jedem Bild im Trainingsdatensatz erscheinen;

Kennzeichnen jedes Warenartikels, der in jedem Bild des Trainingsdatensatzes erscheint;

Berechnen der Anzahl der Kennzeichnungen und der Anzahl der Warenartikel mit übereinstimmenden Kennzeichnungen, die in jedem Bild im Trainingsdatensatz erscheinen; und

Vergleichen der berechneten Anzahl der Warenartikel mit einer entsprechenden Anzahl der Warenartikel für jedes im Trainingsdatensatz enthaltene Bild.

4. System (106) nach Anspruch 1, wobei die Dialogmanager-Engine konfiguriert ist zum:

Umwandeln einer oder mehrerer vorkonfigurierter narrativer Komponenten unter Verwendung eines Sprachsynthesealgorithmus in synthetische Sprache und Wiedergeben der Sprache an die autorisierte Person;

Empfangen und Interpretieren von Äußerungen der autorisierten Person unter Verwendung eines Spracherkennungsalgorithmus; und

Reagieren auf die empfangenen Äußerungen.

5. System (106) nach Anspruch 4, wobei die Dialogmanager-Engine so konfiguriert ist, dass sie einen Sprachsynthesealgorithmus verwendet, der aus der Menge der Sprachsynthesealgorithmen ausgewählt ist, die konkatenative Sprachsynthesealgorithmen, parametrische Sprachsynthesealgorithmen und auf neuronalen Faltungsnetzwerken, rekurrenten neuronalen Netzwerken oder beidem basierende Audiogenerierungsmodelle umfasst; und/oder

wobei die Dialogmanager-Engine so konfiguriert ist, dass sie einen Spracherkennungsalgorithmus verwendet, der aus der Menge der Spracherkennungsalgorithmen ausgewählt wird, die auf Gaußschen Mischungsmodellen basierende Hidden-Markov-Modelle (GMM-HMM), K-Means-Clustering, Erwartungs-Maximierung [EM], Kernel-Hauptkomponentenanalyse, neuronale Deep-Belief-Netzwerke (DBN), rekurrente neuronale Netzwerke und neuronale Time-Delay-Netzwerke (TDNN) umfasst.

6. System (106) nach Anspruch 1, wobei die Gesichtserkennungs-Engine so konfiguriert ist, dass sie ein Bild des Benutzers empfängt und einen Gesichtserkennungsalgorithmus verwendet, um das eine oder die mehreren Gesichtsmerkmale des Benutzers aus dem Bild zu berechnen, und jedes berechnete Gesichtsdetail mit einem oder mehreren gespeicherten Gesichtsdetails einer oder mehrerer autorisierter Personen vergleicht.

7. System (106) nach Anspruch 6, wobei die Gesichtserkennungs-Engine so konfiguriert ist, dass sie einen Gesichtserkennungsalgorithmus verwendet, der aus der Menge der Gesichtserkennungsalgorithmen ausgewählt ist, die Unterstützungsvektormaschinen und Hauptkomponentenanalyse/Kernel-Hauptkomponentenanalyse, unabhängige Komponentenanalyse, Hidden-Markov-Modelle, neuronale Faltungsnetzwerke und generative adversariale Netzwerke umfasst.

8. System (106) nach Anspruch 6, wobei die Gesichtserkennungs-Engine so konfiguriert ist, dass sie einen Gesichtserkennungsalgorithmus verwendet, um das Vorhandensein eines menschlichen Gesichts im Bild zu erkennen, bevor daraus das eine oder die mehreren Gesichtsmerkmale des Benutzers berechnet werden; und optional

wobei die Gesichtserkennungs-Engine so konfiguriert ist, dass sie einen Gesichtserkennungsalgorithmus verwendet, der aus der Menge der Gesichtserkennungsalgorithmen ausgewählt ist, die den Viola-Jones-Gesichtsdetektor, Speeded-Up-Robust-Features- (SURF)Kaskaden, Unterstützungsvektormaschinen (SVM) und neuronale Faltungsnetzwerke umfasst.

9. Verfahren zur Verwaltung des Wareneingangs an einem Standort, umfassend die folgenden Schritte:

Erkennen eines Benutzers als autorisierte Person durch eine Gesichtserkennungs-Engine (406), die von einem oder mehreren Prozessoren ausgeführt wird, unter Verwendung eines oder mehrerer Gesichtsmerkmale des Benutzers;

Erhalten, durch eine Dialogmanager-Engine (410), die von dem einen oder den mehreren Prozessoren ausgeführt wird, einer angegebenen Anzahl von Warenartikeln, die ausgeliefert werden, von der autorisierten Person;

Empfangen eines Bildes der Warenartikel durch eine Quantifizierungs-Engine, die von dem einen oder den mehreren Prozessoren ausgeführt wird;

Entfernen des Hintergrundinhalts aus dem Bild durch die Quantifizierungs-Engine;

Extrahieren von Merkmalen der Warenartikel durch die Quantifizierungs-Engine;

Klassifizieren und Kennzeichnen der Warenartikel durch die Quantifizierungs-Engine auf Basis der extrahierten Merkmale;

Berechnen der Anzahl der im Bild erscheinenden Warenartikel durch die Quantifizierungs-Engine;

Vergleichen der berechneten Anzahl der Warenartikel mit der angegebenen Anzahl der Warenartikel durch eine Vergleichs-Engine, die von dem einen oder den mehreren Prozessoren ausgeführt wird;

Aufzeichnen der berechneten Anzahl der Warenartikel durch die Vergleichs-Engine, wenn die berechnete Anzahl der Warenartikel mit der angegebenen Anzahl der Warenartikel im Wesentlichen übereinstimmt; und

erneutes Trainieren der Quantifizierungs-Engine durch eine Leistungsverbesserungs-Engine, das von dem einen oder den mehreren Prozessoren ausschließlich dann ausgeführt wird, wenn die berechnete Anzahl der Warenartikel nicht mit der angegebenen Anzahl der Warenartikel übereinstimmt, und Aktualisieren einer oder mehrerer Konfigurationsvariablen der Quantifizierungs-Engine unter Verwendung des Bildes, das mit der Abweichung verknüpft ist, wobei die Konfigurationsvariablen Konfigurationsvariablen zur Anpassung an Umgebungsvariablen einschließen, wobei die Umgebungsvariablen mindestens die Beleuchtung, die Stapelmuster der Warenartikel und das Vorhandensein von Schmutz oder Ablagerungen in einer ausgewiesenen Zone umfassen.

10. Verfahren nach Anspruch 9, wobei der Schritt des Berechnens der Anzahl der im Bild erscheinenden Warenartikel die folgenden Schritte umfasst:

Entfernen des Hintergrunds um und zwischen den Warenartikeln aus dem Bild;

Extrahieren eines oder mehrerer Schlüsselmerkmale aus dem Bild;

Bestimmen einer Chargenklassifizierung einer oder mehrerer Gruppen ähnlicher Warenartikel, die im Bild erscheinen;

Kennzeichnen jedes im Bild erscheinenden Warenartikels; und

Berechnen der Anzahl der Kennzeichnungen und der Anzahl der Warenartikel mit übereinstimmenden Kennzeichnungen, die im Bild erscheinen.

11. Verfahren nach Anspruch 9, wobei der Schritt des erneuten Abstimmens einer oder mehrerer Konfigurationsvariablen die folgenden Schritte umfasst:

Hinzufügen des Bildes und der berechneten Anzahl der Warenartikel zu einem vorkonfigurierten Trainingsdatensatz;

erneutes Trainieren eines oder mehrerer von dem Verfahren verwendeter Modelle mit dem Trainingsdatensatz, um die erneut abgestimmten Konfigurationsvariablen zu erzeugen;

erneutes Bewerten der Leistung des Verfahrens mit den erneut trainierten Modellen;

Wiederholen des erneuten Trainings und der erneuten Bewertung, bis ein vordefiniertes Leistungsniveau erreicht ist; und

Ersetzen der Konfigurationsvariablen durch die erneut abgestimmten Konfigurationsvariablen;

und optional

wobei der Schritt des erneuten Bewertens der Leistung des Verfahrens mit den erneut trainierten Modellen die folgenden Schritte umfasst:

Entfernen des Hintergrunds um und zwischen den Warenartikeln aus dem Bild;

Extrahieren eines oder mehrerer Schlüsselmerkmale aus dem Bild;

Bestimmen einer Chargenklassifizierung einer oder mehrerer Gruppen ähnlicher Warenartikel, die im Bild erscheinen;

Kennzeichnen jedes im Bild erscheinenden Warenartikels;
Berechnen der Anzahl der Kennzeichnungen und der Anzahl der Warenartikel mit übereinstimmenden Kennzeichnungen, die im Bild erscheinen; und
Vergleichen der berechneten Anzahl der Warenartikel mit der angegebenen Anzahl der Warenartikel.

12. Verfahren nach Anspruch 9, wobei der Schritt des Erhaltens einer angegebenen Anzahl von Warenartikeln, die ausgeliefert werden, von der autorisierten Person die folgenden Schritte umfasst:

Umwandeln einer oder mehrerer vorkonfigurierter narrative Komponenten in synthetische Sprache unter Verwendung eines Sprachsynthesealgorithmus und Wiedergeben der Sprache an die autorisierte Person;
Empfangen und Interpretieren von Äußerungen der autorisierten Person unter Verwendung eines Spracherkennungsalgorithmus; und
Reagieren auf die empfangenen Äußerungen.

13. Verfahren nach Anspruch 12, wobei der Schritt des Umwandelns einer oder mehrerer vorkonfigurierter narrativer Komponenten in synthetische Sprache und des Wiedergebens der Sprache an die autorisierte Person den Schritt des Verwendens eines Sprachsynthesealgorithmus umfasst, der aus der Menge der Sprachsynthesealgorithmen ausgewählt ist, die konkatenative Sprachsynthesealgorithmen, parametrische Sprachsynthesealgorithmen und auf neuronalen Faltungsnetzwerken, rekurrenten neuronalen Netzwerken oder beidem basierende Audiogenerierungsmodelle umfasst; und/oder
wobei der Schritt des Empfangens und Interpretierens von Äußerungen der autorisierten Person den Schritt des Verwendens eines Spracherkennungsalgorithmus umfasst, der aus der Menge der Spracherkennungsalgorithmen ausgewählt ist, die auf Gaußschen Mischungsmodellen basierende Hidden-Markov-Modelle (GMM-HMM), K-Means-Clustering und Erwartungs-Maximierung [EM], Kernel-Hauptkomponentenanalyse, neuronale Deep-Belief-Netzwerke (DBN), rekurrente neuronale Netzwerke und neuronale Time-Delay-Netzwerke (TDNN) umfassen.

14. Verfahren nach Anspruch 9, wobei der Schritt des Verwendens eines oder mehrerer Gesichtsmerkmale eines Benutzers zur Erkennung des Benutzers als autorisierte Person die folgenden Schritte umfasst:

Empfangen eines Bildes des Benutzers;
Verwenden eines Gesichtserkennungsalgorithmus zur Berechnung eines oder mehrerer Gesichtsmerkmale des Benutzers aus dem Bild; und
Vergleichen jedes berechneten Gesichtsdetails mit einem oder mehreren gespeicherten Gesichtsdetails einer oder mehrerer autorisierter Personen.

15. Nichtflüchtiges, computerlesbares Medium, das so konfiguriert ist, dass es ein Programm speichert, das einen Computer veranlasst, den Wareneingang an einem Standort zu verwalten, wobei das Programm konfiguriert ist zum:

Erkennen eines Benutzers unter Verwendung eines oder mehrerer Gesichtsmerkmale des Benutzers als autorisierte Person;
Erhalten, von der autorisierten Person, einer angegebenen Anzahl von Warenartikeln, die ausgeliefert werden;
Empfangen eines Bildes der Warenartikel;
Entfernen von Hintergrundinhalt aus dem Bild;
Extrahieren von Merkmalen der Warenartikel;
Kennzeichnen und Klassifizieren der Warenartikel unter Verwendung der extrahierten Merkmale;
Berechnen der Anzahl der im Bild erscheinenden Warenartikel;
Vergleichen der berechneten Anzahl der Warenartikel mit der angegebenen Anzahl der Warenartikel;
Aufzeichnen der berechneten Anzahl der Warenartikel, wenn die berechnete Anzahl der Warenartikel im Wesentlichen mit der angegebenen Anzahl der Warenartikel übereinstimmt; und
erneuten Trainieren der Quantifizierungs-Engine ausschließlich dann, wenn die berechnete Anzahl der Warenartikel nicht mit der angegebenen Anzahl der Warenartikel übereinstimmt, und Aktualisieren einer oder mehrerer Konfigurationsvariablen der Quantifizierungs-Engine unter Verwendung des Bildes, das mit der Abweichung verknüpft ist, wobei die Konfigurationsvariablen Konfigurationsvariablen zur Anpassung an Umgebungsvariablen einschließen, wobei die Umgebungsvariablen mindestens die Beleuchtung, die Stapelmuster der Warenartikel und das Vorhandensein von Schmutz oder Ablagerungen in einer ausgewiesenen Zone umfassen.

**Revendications**

1. Système de gestion de réception de marchandises (106) comprenant :

   un dispositif de stockage non transitoire intégrant une ou plusieurs routines pour gérer la réception de marchandises à un emplacement ; et
   un ou plusieurs processeurs couplés au dispositif de stockage non transitoire et utilisables pour exécuter les une ou plusieurs routines, dans lequel les une ou plusieurs routines incluent :

   un moteur de reconnaissance faciale (406) qui, lorsqu'il est exécuté par les un ou plusieurs processeurs, utilise une ou plusieurs caractéristiques faciales d'un utilisateur pour reconnaître l'utilisateur comme une personne autorisée ;
   un moteur de gestion de dialogue (410) qui, lorsqu'il est exécuté par les un ou plusieurs processeurs, obtient à partir de la personne autorisée un nombre déclaré de marchandises livrées ;
   un moteur de quantification qui, lorsqu'il est exécuté par les un ou plusieurs processeurs, reçoit une image des marchandises, supprime un contenu d'arrière-plan de l'image, extrait des caractéristiques des marchandises, classifie et étiquette les marchandises, et calcule le nombre de marchandises apparaissant dans l'image ;
   un moteur de comparaison qui, lorsqu'il est exécuté par les un ou plusieurs processeurs, compare le nombre calculé de marchandises avec le nombre déclaré de marchandises, et, en cas de concordance substantielle, enregistre le nombre calculé de marchandises ; et
   un moteur d'amélioration de performances qui, lorsqu'il est exécuté par les un ou plusieurs processeurs, réentraîne le moteur de quantification exclusivement lorsque le nombre calculé de marchandises ne concorde pas avec le nombre déclaré de marchandises, et met à jour une ou plusieurs variables de configuration du moteur de quantification à l'aide de l'image associée à la non-concordance, dans lequel les variables de configuration incluent des variables de configuration pour une adaptation à des variables environnementales, les variables environnementales comprenant au moins un éclairage, des motifs d'empilement de marchandises et la présence de saletés ou de débris dans une zone désignée.

2. Système (106) selon la revendication 1, dans lequel le moteur de quantification est configuré pour :

   supprimer de l'image l'arrière-plan autour et entre des marchandises ;
   extraire une ou plusieurs caractéristiques clés de l'image ;
   déterminer une classification en lots d'un ou plusieurs groupes de marchandises similaires apparaissant dans l'image ;
   étiqueter chaque marchandise apparaissant dans l'image ; et
   calculer le nombre d'étiquettes et le nombre de marchandises avec des étiquettes concordantes apparaissant dans l'image.

3. Système (106) selon la revendication 1, dans lequel le moteur d'amélioration de performances est configuré pour :

   ajouter l'image et le nombre calculé de marchandises à un ensemble de données d'entraînement préconfiguré ;
   réentraîner un ou plusieurs modèles utilisés par le moteur d'amélioration de performances avec l'ensemble d'entraînement ;
   réévaluer les performances du moteur d'amélioration de performances avec les modèles réentraînés ;
   répéter le réentraînement et la réévaluation jusqu'à ce qu'un niveau prédéfini de performances soit atteint ; et
   remplacer les variables de configuration du moteur de quantification par celles des modèles réentraînés du moteur d'amélioration de performances ;
   et éventuellement
   dans lequel le moteur d'amélioration de performances est configuré pour :

   supprimer de chaque image dans l'ensemble d'entraînement l'arrière-plan autour et entre des marchandises ;
   extraire une ou plusieurs caractéristiques clés de chaque image dans l'ensemble d'entraînement ;
   déterminer une classification en lots d'un ou plusieurs groupes de marchandises similaires apparaissant dans chaque image dans l'ensemble d'entraînement ;
   étiqueter chaque marchandise apparaissant dans chaque image de l'ensemble d'entraînement ;
   calculer le nombre d'étiquettes et le nombre de marchandises avec des étiquettes concordantes apparaissant dans chaque image dans l'ensemble d'entraînement ; et

comparer le nombre calculé de marchandises avec un nombre correspondant de marchandises pour chaque image contenue dans l'ensemble d'entraînement.

4. Système (106) selon la revendication 1, dans lequel le moteur de gestion de dialogue est configuré pour :

convertir un ou plusieurs éléments narratifs préconfigurés en parole synthétique à l'aide d'un algorithme de synthèse vocale et lire la parole à la personne autorisée ;

recevoir et interpréter des énoncés provenant de la personne autorisée à l'aide d'un algorithme de reconnaissance vocale ; et

répondre aux énoncés reçus.

5. Système (106) selon la revendication 4, dans lequel le moteur de gestion de dialogue est configuré pour utiliser un algorithme de synthèse vocale sélectionné dans l'ensemble d'algorithmes de synthèse vocale comprenant les algorithmes de synthèse vocale concaténatifs, les algorithmes de synthèse vocale paramétriques et les modèles génératifs audio basés sur les réseaux neuronaux convolutifs, les réseaux neuronaux récurrents ou les deux ; et/ou dans lequel le moteur de gestion de dialogue est configuré pour utiliser un algorithme de reconnaissance vocale sélectionné dans l'ensemble d'algorithmes de reconnaissance vocale comprenant les modèles de Markov cachés basés sur un modèle de mélange gaussien (GMM-HMM), le groupement des K-moyennes, l'espérance-maximisation (EM), l'analyse en composantes principales à noyau, les réseaux neuronaux de croyances profonds (DBN), les réseaux neuronaux récurrents et les réseaux neuronaux à retard (TDNN).

6. Système (106) selon la revendication 1, dans lequel le moteur de reconnaissance faciale est configuré pour recevoir une image de l'utilisateur et pour utiliser un algorithme de reconnaissance faciale pour calculer les une ou plusieurs caractéristiques faciales de l'utilisateur à partir de l'image ; et comparer chaque détail facial calculé à un ou plusieurs détails faciaux stockés d'une ou plusieurs personnes autorisées.

7. Système (106) selon la revendication 6, dans lequel le moteur de reconnaissance faciale est configuré pour utiliser un algorithme de reconnaissance faciale sélectionné dans l'ensemble d'algorithmes de reconnaissance faciale comprenant les machines à vecteurs de support, l'analyse en composantes principales/analyse en composantes principales à noyau, l'analyse en composantes indépendantes, les modèles de Markov cachés, les réseaux neuronaux convolutifs et les réseaux antagonistes génératifs.

8. Système (106) selon la revendication 6, dans lequel le moteur de reconnaissance faciale est configuré pour utiliser un algorithme de détection faciale afin de détecter la présence d'un visage humain dans l'image avant de calculer, à partir de celle-ci, les une ou plusieurs caractéristiques faciales de l'utilisateur ; et éventuellement

dans lequel le moteur de reconnaissance faciale est configuré pour utiliser un algorithme de détection faciale sélectionné dans l'ensemble d'algorithmes de détection faciale comprenant le détecteur facial de Viola et Jones, les cascades de caractéristiques robustes accélérées (SURF), les machines à vecteurs de support (SVM) et les réseaux neuronaux convolutifs.

9. Procédé de gestion de la réception de marchandises à un emplacement, comprenant les étapes de :

reconnaissance, par un moteur de reconnaissance faciale (406) exécuté par un ou plusieurs processeurs, d'un utilisateur comme une personne autorisée à l'aide d'une ou plusieurs caractéristiques faciales de l'utilisateur ;

obtention, par un moteur de gestion de dialogue (410) exécuté par les un ou plusieurs processeurs, à partir de la personne autorisée, d'un nombre déclaré de marchandises livrées ;

réception, par un moteur de quantification exécuté par les un ou plusieurs processeurs, d'une image des marchandises ;

suppression, par le moteur de quantification, d'un contenu d'arrière-plan de l'image ;

extraction, par le moteur de quantification, de caractéristiques des marchandises ;

classification et étiquetage, par le moteur de quantification, des marchandises sur la base des caractéristiques extraites ;

calcul, par le moteur de quantification, du nombre de marchandises apparaissant dans l'image ;

comparaison, par un moteur de comparaison exécuté par les un ou plusieurs processeurs, du nombre calculé de marchandises avec le nombre déclaré de marchandises ;

enregistrement, par le moteur de comparaison, du nombre calculé de marchandises en cas de concordance substantielle entre le nombre calculé de marchandises et le nombre déclaré de marchandises ; et

réentraînement, par un moteur d'amélioration de performances exécuté par les un ou plusieurs processeurs, du moteur de quantification exclusivement lorsque le nombre calculé de marchandises ne concorde pas avec le nombre déclaré de marchandises, et mise à jour d'une ou plusieurs variables de configuration du moteur de quantification à l'aide de l'image associée à la non-concordance, dans lequel les variables de configuration incluent des variables de configuration pour une adaptation à des variables environnementales, les variables environnementales comprenant au moins un éclairage, des motifs d'empilement de marchandises et la présence de saletés ou de débris dans une zone désignée.

**10.** Procédé selon la revendication 9, dans lequel l'étape de calcul du nombre de marchandises apparaissant dans l'image comprend les étapes de :

suppression, de l'image, de l'arrière-plan autour et entre des marchandises ;
extraction d'une ou plusieurs caractéristiques clés de l'image ;
détermination d'une classification en lots d'un ou plusieurs groupes de marchandises similaires apparaissant dans l'image ;
étiquetage de chaque marchandise apparaissant dans l'image ; et
calcul du nombre d'étiquettes et du nombre de marchandises avec des étiquettes concordantes apparaissant dans l'image.

**11.** Procédé selon la revendication 9, dans lequel l'étape de réajustement d'une ou plusieurs variables de configuration comprend les étapes de :

ajout de l'image et du nombre calculé de marchandises à un ensemble de données d'entraînement préconfiguré ;
réentraînement d'un ou plusieurs modèles utilisés par le procédé avec l'ensemble d'entraînement, pour produire les variables de configuration réajustées ;
réévaluation des performances du procédé avec les modèles réentraînés ;
répétition du réentraînement et de la réévaluation jusqu'à ce qu'un niveau prédéfini de performances soit atteint ; et
remplacement des variables de configuration par les variables de configuration réajustées ;
et éventuellement
dans lequel l'étape de réévaluation des performances du procédé avec les modèles réentraînés comprend les étapes de :

suppression, de l'image, de l'arrière-plan autour et entre des marchandises ;
extraction d'une ou plusieurs caractéristiques clés de l'image ;
détermination d'une classification en lots d'un ou plusieurs groupes de marchandises similaires apparaissant dans l'image ;
étiquetage de chaque marchandise apparaissant dans l'image ;
calcul du nombre d'étiquettes et du nombre de marchandises avec des étiquettes concordantes apparaissant dans l'image ; et
comparaison du nombre calculé de marchandises avec le nombre déclaré de marchandises.

**12.** Procédé selon la revendication 9, dans lequel l'étape d'obtention d'un nombre déclaré de marchandises livrées à partir de la personne autorisée comprend les étapes de :

conversion d'un ou plusieurs éléments narratifs préconfigurés en parole synthétique à l'aide d'un algorithme de synthèse vocale et lecture de la parole à la personne autorisée ;
réception et interprétation d'énoncés provenant de la personne autorisée à l'aide d'un algorithme de reconnaissance vocale ; et
réponse aux énoncés reçus.

**13.** Procédé selon la revendication 12, dans lequel l'étape de conversion d'un ou plusieurs éléments narratifs préconfigurés en parole synthétique et de lecture de la parole à la personne autorisée comprend l'étape d'utilisation d'un algorithme de synthèse vocale sélectionné dans l'ensemble d'algorithmes de synthèse vocale comprenant les algorithmes de synthèse vocale concaténatifs, les algorithmes de synthèse vocale paramétriques et les modèles génératifs audio basés sur les réseaux neuronaux convolutifs, les réseaux neuronaux récurrents ou les deux ; et/ou dans lequel l'étape de réception et d'interprétation d'énoncés provenant de la personne autorisée comprend l'étape d'utilisation d'un algorithme de reconnaissance vocale sélectionné dans l'ensemble d'algorithmes de reconnaissance vocale comprenant les modèles de Markov cachés basés sur un modèle de mélange gaussien (GMM-HMM), le groupement des K-moyennes, l'espérance-maximisation (EM), l'analyse en composantes principales à noyau, les réseaux neuronaux de croyances profonds (DBN), les réseaux neuronaux récurrents et les réseaux neuronaux à retard (TDNN).

14. Procédé selon la revendication 9, dans lequel l'étape d'utilisation d'une ou plusieurs caractéristiques faciales d'un utilisateur pour reconnaître l'utilisateur comme une personne autorisée comprend les étapes de :

   réception d'une image de l'utilisateur ;
   utilisation d'un algorithme de reconnaissance faciale pour calculer les une ou plusieurs caractéristiques faciales de l'utilisateur à partir de l'image ; et
   comparaison de chaque détail facial calculé à un ou plusieurs détails faciaux stockés d'une ou plusieurs personnes autorisées.

15. Support non transitoire lisible par ordinateur configuré pour stocker un programme amenant un ordinateur à gérer la réception de marchandises à un emplacement, ledit programme étant configuré pour :

   reconnaître un utilisateur comme une personne autorisée en utilisant une ou plusieurs caractéristiques faciales de l'utilisateur ;
   obtenir à partir de la personne autorisée un nombre déclaré de marchandises livrées ;
   recevoir une image des marchandises ;
   supprimer un contenu d'arrière-plan de l'image ;
   extraire des caractéristiques des marchandises ;
   classifier et étiqueter les marchandises sur la base des caractéristiques extraites ;
   calculer le nombre de marchandises apparaissant dans l'image ;
   comparer le nombre calculé de marchandises avec le nombre déclaré de marchandises ;
   enregistrer le nombre calculé de marchandises en cas de concordance substantielle entre le nombre calculé de marchandises et le nombre déclaré de marchandises ; et
   réentraîner le moteur de quantification exclusivement lorsque le nombre calculé de marchandises ne concorde pas avec le nombre déclaré de marchandises, et mettre à jour une ou plusieurs variables de configuration du moteur de quantification à l'aide de l'image associée à la non-concordance, dans lequel les variables de configuration incluent des variables de configuration pour une adaptation à des variables environnementales, les variables environnementales comprenant au moins un éclairage, des motifs d'empilement de marchandises et la présence de saletés ou de débris dans une zone désignée.

FIG. 1

FIG. 2

**FIG. 3**

300

301 Processor(s)

302 Interface(s)

304 Memory Unit

306 Processing Engine(s)

308 Data

FIG. 4

FIG. 5

602 | 604 | 606 | 608 | 610 | 612

Video Frames → Remove Background → Feature Extraction → Batch Classification → Labelling → Calculate Quantities

614

Transmit Calculated Quantities

**FIG. 6(a)**

616 | 618

Receive Configuration Variables → Replace Current Configuration Variables with Received Configuration Variables

**FIG. 6(b)**

FIG. 7

702 Receive $Im$, $N_{Stated}$ and $N_{Calc}$

704 Calculate $\Delta$

706 $\Delta < Th$ ?

707 Transmit $Config$

708 $Im$ & $N_{Stated}$ in Training Set

710 Add $Im$ & $N_{Stated}$ to Training Set

712 Retrain

714a Remove Background

714b Feature Extraction

714c Batch Classification

714d Labelling

714e Calculate Quantities

800

```
┌────────────────────────────────────────┐
│   Determine that User is Authorised Person   │  802
└────────────────────────────────────────┘
                     │
                     ▼
┌────────────────────────────────────────┐
│   Conduct  Dialogue with the Authorised Person   │  804
└────────────────────────────────────────┘
                     │
                     ▼
┌────────────────────────────────────────┐
│        Capture Image of Goods Items        │  806
└────────────────────────────────────────┘
                     │
                     ▼
┌────────────────────────────────────────┐
│     Calculate Number of Goods Items in Image     │  808
└────────────────────────────────────────┘
                     │
                     ▼
┌────────────────────────────────────────┐
│   Compare Calculated Number of Goods Items with   │  810
│        Information from Authorised Person        │
└────────────────────────────────────────┘
                     │
                     ▼
┌────────────────────────────────────────┐
│ Improve Performance Using Difference Between Calculated Number of │  812
│      Goods Items and Information from Authorised Person      │
└────────────────────────────────────────┘
```

FIG. 8

# EP 4 226 272 B1

REFERENCES CITED IN THE DESCRIPTION

**Patent documents cited in the description**

- US 20200231382 A1

- WO 2020152569 A2